# FASCICULE DE BREVET EUROPEEN

(11) **EP 0 445 024 B1**
(45) Date de publication et mention de la délivrance du brevet: **13.07.1994**
(21) Numéro de dépôt: 91400523.6
(22) Date de dépôt: 26.02.1991
(51) Int. Cl.: B60R 25/02

(54) **Dispositif antivol pour véhicule automobile**
Diebstahlschutzvorrichtung für Kraftfahrzeuge
Anti-theft device for motor vehicles

(30) Priorité: 26.02.1990 FR 9002344
(43) Date de publication de la demande: 04.09.1991
(73) Titulaire: Martins, Manuel, F-93190 Livry Gargan (FR)
(72) Inventeur: Martins, Manuel, F-93190 Livry Gargan (FR)
(74) Mandataire: Burtin, Jean-François

(56) Documents cités:
- EP-A- 0 128 786
- EP-A- 0 203 850
- FR-A- 2 527 999

## Description

L'invention concerne un dispositif antivol adaptable à tous les véhicules automobiles actuellementen circulation, permettant normalement d'associer rigidement le volant en permanence à l'axe de la colonne de direction ou, lorsque le véhicule doit être protégé, de désolidariser le volant de la colonne de direction de façon à rendre ce volant inactif.
On connaît déjà (par exemple brevet européen 0.128.786) des dispositifs antivol qui permetent de désaccoupler le volant de la colonne de direction pour rendre le véhicule inutilisable. De tels dispositifs donnent satisfaction, mais ont comme incovénient d'obliger l'utilisateur à ôter le volant et à l'emmener avec lui lorsqu'il quitte le véhicule. De plus, les dispositifs d'adaptation du volant à la colonne de direction permettant de l'ôter rapidement sont complexes et d'un prix de revient trop important. C'est dans le brevet européen 0.128.786 que l'on trouve, pour la première fois, un dispositif anti-vol permettant le désaccouplement du volant, de la colonne de direction. La demande de brevet européen 84401047 a décrit un perfectionnement de ce dispositif antivol en remplaçant le moyen de solidarisation prévu audit brevet par une clavette munie d'une bille pour solidariser ou désolidariser le volant. Néanmoins, ce dispositif ainsi réalisé risque d'être fragile et d'entraîner au moins des vibrations au cours de la conduite.

Le brevet européen 0.203.850, qui décrit un dispositif correspondant au préambule de la revendication 1, améliore ce dernier dispositif de solidarisation ou de désolidarisation du volant comportant deux types de moyen d'accouplement et d'un moyen d'assemblage amovible pour maintenir assemblées axialement l'embase, la pièce de liaison et la platine du volant. Cette pièce de liaison est constituée d'un levier permettant l'extraction et d'une goupille à billes rétractables. Ce dispositif de liaison est inévitablement fragile et a besoin d'être consolidé par l'existence d'un ensemble de cannelures réalisées sur les deux faces et aptes à s'imbriquer les unes dans les autres pour procurer l'accouplement recherché. La réalisation de telles cannelures ou de sillons, disposés symétriquement, est nécessairement un travial mécanique.

L'invention décrite dans la présente demande de brevet présente l'avantage de ne pas amener l'utilisateur a retirer le volant comme c'est le cas dans le brevet européen 0.203.850 ou de ne pas assurer la solidarisation de l'ensemble en rotation par une simple clavette munie d'une bille rétractable.
L'invention vise donc à palier les inconvénients des systèmes antérieurs en proposant un dispositif antivol pour véhicules permettant à l'utilisateur, lorsqu'il quitte le véhicule, de désolidariser le volant de la colonne de direction, rendant ainsi le véhicule inutilisable, tout en laissant néanmoins ce volant monté sur la colonne de direction à demeure. De la sorte, lorsque l'utilisateur a quitté le vehicule, toute action ultérieure non désirée sur le volant dans le but d'agir sur la direction du véhicule, sera sans effet.
Pour ce faire, l'invention concerne un dispositif antivol pour véhicule automobile selon la revendication 1.
Le dispositif selon l'invention comporte d'une part, l'avantage par rapport à l'art antérieur que le dispositf reste en place même lorsqu'il est déconnecté et qu'ainsi, on évite la désolidarisation complète du volant pendant qu'on ôte l'organe amovible, et d'autre part, dans une forme de réalisation préférable, l'avantage qu'en rotation, l'organe amovible comporte une pluralité de chevilles venant s'insérer dans une pluralité d'évidements disposés symétriquement. On asure ainsi une sécurité complète du système d'assujettissement et une spécificité totale de l'organe amovible du fait d'une combinaison propre à chaque véhicule.

Dans une autre forme de réalisation préférable de l'invention, le dispositif comporte un moyen pour positionner et maintenir temporairement les brides en position l'une par rapport à l'autre, notamment alignées selon l'axe de la colonne de direction, avant la mise en place ou après le retrait de l'organe amovible. Ce moyen est constitué d'une bille montée sur une des deux brides en étant rappelée en saillie par rapport au plan de cette bride pour pouvoir s'engager dans un logement complémentaire de l'autre bride lorsque celle-ci est en position et réaliser ainsi un léger blocage des deux brides l'une par rapport à l'autre.

L'organe amovible coopère avec la bride du volant et/ou avec la bride de la colonne de direction par l'intermédiaire d'au moins une cheville solidaire de l'organe amovible ou de cette bride, s'étendant orthogonalement à l'axe de la colonne de direction, et engagée dans un évidement complémentaire de cette bride ou de l'organe amovible. L'organe amovible comporte une pluralité de chevilles et/ou d'évidements formant, avec une pluralité d'évidements et/ou de chevilles complémentaires des brides du volant et de la colonne de direction, un code spécifique à chaque dispositif antivol selon l'invention. L'une au moins des brides est globalement constituée d'un disque ou d'une collerette rapporté sur le volan et/ou sur la colonne de direction.

D'autres caractéristiques et avantages de l'invention apparaitront à la lecture de la description suivante qui se réfère aux figures annexées dans lesquelles :
- la figure 1 est une vue schématique de face du dispositif selon l'invention, l'organe amovible étant ôté, les deux brides étant en position alignées l'une par rapport à l'autre.
- la figure 2 est une vue similaire à la figure 1, l'organe amovible étant en place pour solidariser les deux brides en rotation l'une par rapport à l'autre.
- la figure 3 est une vue schématique de face illustrant la position que prend le volant et sa bride lorsque l'organe amovible a été ôté et que l'on a tenté de lui imposer une rotation en vue d'agir sur la colonne de direction.
- la figure 4 est une vue partielle de détail en section selon la ligne IV-IV de la figure 1 illustrant le moyen pour positionner et maintenir temporairement les brides en position d'un dispositif selon l'invention.
- la figure 5 est une vue partielle de détail en section droite verticale conformément à la ligne V-V de la figure 2, illustrant le montage du goujon permettant le pivotement des brides l'une par rapport à l'autre dans un dispositif antivol selon l'invention.
- la figure 6 est une vue en section selon la ligne VI-VI de la figure 1, représentant un premier mode de réalisation d'un dispositif selon l'invention.
- la figure 7 est une vue similaire à la figure 6 représentant un second mode de réalisation d'un dispositif selon l'invention.

L'invention concerne un dispositif antivol pour véhicule automobile permettant normalement d'associer rigidement le volant 1 à la colonne de direction 2 (partiellement représentés sur les figures) du véhicule ou, lorsque le véhicule doit être protégé, de désolidariser en rotation le volant 1 de la colonne de direction 2.

Selon l'invention, le dispositif est caractérisé en ce qu'il comporte un goujon 3 parallèle à l'axe 4 de la colonne de direction 2 mais excentré par rapport à cet axe 4, ce goujon 3 associant une bride 5 du volant 1 à une bride 6 de la colonne de direction 2, les deux brides 5, 6 pouvant pivoter l'une par rapport à l'autre autour de ce goujon 3 tout en étant maintenues montée l'une sur l'autre par ce goujon 3, et en ce qu'il comporte au moins un organe amovible 7 destiné à coopérer avec ces deux brides 5,6 lorsqu'il est en place pour les associer normalement rigidement l'une à l'autre en interdisant leur pivotement relatif autour du goujon 3, de sorte que, dès que l'organe amobile 7 est ôté, les brides 5, 6 peuvent pivoter autour du goujon 3, le volant 1 n'étant plus solidaire en rotation de la colonne de direction 2 mais restant monté sur celle-ci.

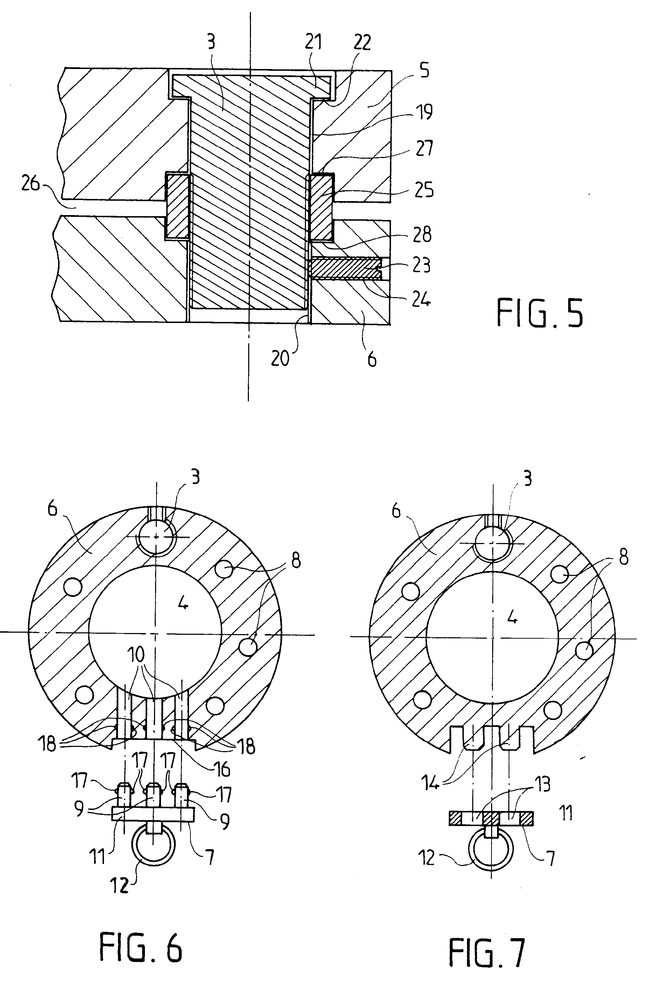

Les deux brides 5, 6 représentées sur les figures sont globalement constituées d'un disque ou d'une collerette rapporté. La bride 5 et une collerette montée directement sur le volant 1 grâce à des vis insérées par-dessous, à travers des alésages de cette bride 5 dans des taraudages du volant 1. De même, la bride 6 est une collerette qui est montée directement sur la colonne de direction 2 ou sur un manchon de cette colonne de direction 2 grâce à des vis insérées par-dessus, à travers des alésages de cette bride 6 dans des taraudages de la colonne de direction 2 ou de son manchon. Il est aisé de prévoir pour ces collerettes des alésages 8 (figures 6 et 7) de montage qui conviennent pour tous les types de volant et de colonne de direction habituellement commercialisés.

Les brides 5, 6 s'étendent globalement perpendiculairement à l'axe 4 de la colonne de direction 2.

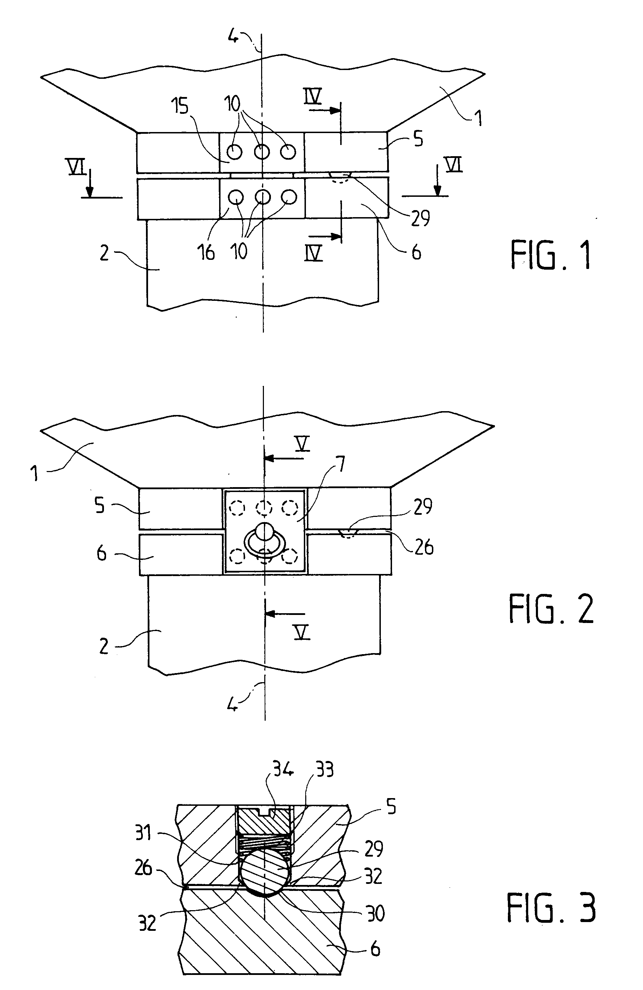

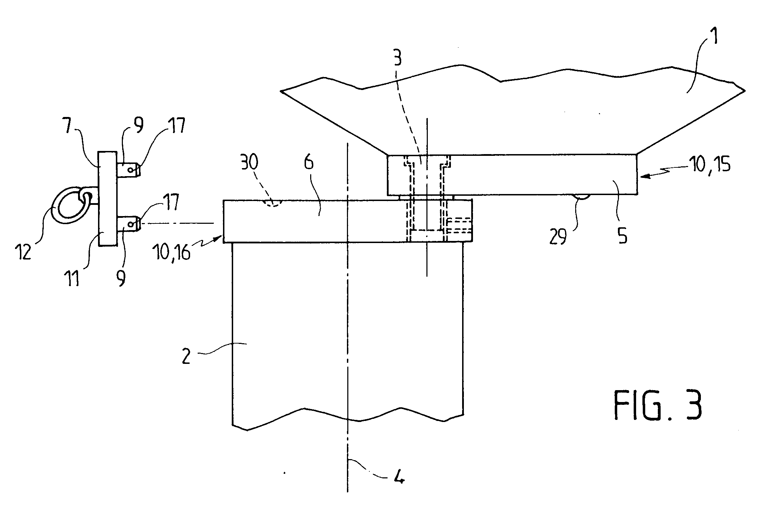

Le goujon 3 est excentré par rapport à l'axe 4 (figure 3, 6 et 7), de sorte que lorsque les deux brides 5, 6 sont amenées à pivoter l'une par rapport à l'autre autour du goujon 3, elles quittent leur position initiale alignées l'une par rapport à l'autre et selon l'axe 4 de la colonne de direction 2. Ainsi, la bride 5 et le volant 1 qui la supporte se déplacent dans une position qui n'est plus alignée avec l'axe 4 de la colonne de direction 2. Tout couple de rotation exercé sur le volant 1 alors que l'organe amovible 7 a été ôté a donc pour effet de faire pivoter la bride 5 et le volant 1 qui la supporte autour de ce goujon 3, sans influencer aucunement la colonne de direction 2 qui reste immobile. Dans ces conditions, on comprend qu'il est impossible de piloter le véhicule. La position non alignée de la bride 5 et du volant 1 est représentée sur la figure 3 qui est une figure de droite par rapport aux figures 1 et 2.

Sur les modes de réalisation représentés aux figures 1 à 6, l'organe amovible 7 coopère avec la bride 5 du volant et avec la bride 6 de la colonne de direction par l'intermédiaire de chevilles 9 solidaires de cet organe amovible 7, s'étendant lorsqu'il est en place orthogonalement (c'est-à-dire à angle droit mais dans un plan distinct) à l'axe 4 de la colonne de direction 2, et engagées dans des évidements 10 complémentaires de même direction des brides (5,6). Plus précisément, l'organe amovible 7 est formé d'une clé constituée d'une pluralité de chevilles 9 pouvant être engagées dans des évidements 10 complémentaires ménagés respectivement dans la bride 5 du volant et dans la bride 6 de la colonne de direction orthogonalement à l'axe 4, d'une plaque de support 11 comme pour toutes les chevilles 9, et d'un moyen de préhension 12 en forme d'anneau relié à la plaque de support 11. Sur les figures, on a représenté trois chevilles 9 destinées à être insérées dans trois évidements complémentaires 10 de la bride 6 de la colonne de direction. La plaque de support 11 est plane et les différentes chevilles 9 et évidements 10 s'étendent parallèlement les uns aux autres.

En variante représentée sur la figure 7, l'organe amovible 7 peut être constitué d'une pluralité d'évidements 13 ménagés dans la plaque support 11, une pluralité de chevilles 14 étant prévues solidaires des brides 5, 6 pour s'engager dans ces évidements 13 de l'organe amovible 7. Bien évidemment, on peut également combiner ces deux variantes de réalisation en prévoyant qu'un même organe amovible 7 comporte à la fois des chevilles 9 destinées à être engagées dans des évidements 10 de l'une et/ou de l'autre 5, 6 des brides, et des évidements 13 dans lesquels des chevilles 14 solidaires de l'une et/ou de l'autre 5, 6 des brides viennent s'engager. On peut prévoir des évidements 10 sur une bride et des chevilles 14 sur l'autre bride. On peut prévoir également sur une même bride à la fois des évidements 10 et des chevilles 14...

Selon l'invention, l'organe amovible 7 comporte donc une pluralité de chevilles 9 et/ou évidements 13 formant, avec une pluralité d'évidements 10 et/ou de chevilles 14 complémentaires des brides 5, 6 du volant et de la colonne de direction, un code spécifique à chaque dispositif antivol selon l'invention. Il est possible de varier pratiquement à l'infini la dimension, la forme, la répartition, le nombre de ces chevilles et/ou évidements 9, 10, 13, 14. De la sorte, un utilisateur qui disposerait d'un organe amovible correspondant à un véhicule donné, ne pourrait utiliser ce véhicule. Pour utiliser le véhicule, il faut donc nécessairement détenir l'organe amovible 7 correspondant très exactement au dispositif antivol et au code défini par les chevilles et/ou évidements.

Les brides 5, 6 sont globalement cylindriques de révolution autour de l'axe 4 de la colonne de direction, et un méplat 15, 16 tangentiel est ménagé à la périphérie de chacune d'elles pour réceptionner la plaque de support plane 11. Les chevilles 9, 14 et/ou évidements 10, 13 s'étendent perpendiculairement à la plaque de support 11 et au méplat 15, 16.

Les deux brides sont donc associées l'une à l'autre rigidement et bloquées en rotation par l'organe amovible 7 lorsqu'il est mis en place, c'est-à-dire lorsque les chevilles 9 sont engagées dans les évidements 10 des brides 5, 6 et/ou lorsque les chevilles 14 des brides 5, 6 sont engagés dans les évidements 13 de l'organe amovible 7. La plaque de support 11 commune aux chevilles 9 et/ou aux évidements 13 réalise la liaison rigide entre les deux brides 5, 6.

Sur le mode de réalisation représenté à la figure 6, chaque cheville 9 de l'organe amovible 7 est munie de billes de verrouillage 17 qui s'étendent en saillie à l'extérieur de la surface de cette cheville 9, rappelées élastiquement dans cette position en saillie mais pouvant être effacées à l'intérieur de la cheville 9. Ces billes 17 viennent s'engager dans des évidements ou rainures 18 ménagés dans les évidements 10 complémentaires de la bride 5, 6 afin de maintenir l'organe amovible 7 en place et éviter que celui-ci ne puisse se dégager de façon intempestive et libérer les brides 5, 6. De telles billes de verrouillage 17 et leur montage sont connus et ne seront donc pas décrits en détail. On peut également prévoir de telles billes de verrouillage dans la variante représentée à la figure 7 ou dans les autres variantes. D'autres systèmes équivalents de verrouillage temporaire amovible peuvent être prévus aux lieux et places de ces billes 17.

Le goujon 3 formant l'axe de pivotement des deux brides 5, 6 l'une par rapport à l'autre est représenté plus en détail à la figure 5. Il est constitué d'une vis 3 insérée dans un alésage 19 de l'une 5 des brides notamment la bride 5 du volant 1. La partie extrême filetée de la vis 3 est engagée dans un taraudage 20 de l'autre bride 6 notamment la bride 6 de la colonne de direction 2. La partie de la vis 3 venant au contact de l'alésage 19 est de préférence cylindrique de révolution et dépourvue de filetage afin de permettre un pivotement correct de la bride 5 autour de cette vis 3. La tête 21 de la vis 3 est effacée dans un méplat 22 de la bride 5. La vis 3 peut être bloquée en rotation dans le taraudage 20 par tout moyen approprié, notamment grâce à une vis de blocage 23 sans tête insérée dans un taraudage 24 de la bride 6 de la colonne de direction 2 s'étendant perpendiculairement à l'axe de la vis 3 et débouchant dans le taraudage 20, de sorte que l'extrémité de la vis 23 de blocage vient au contact de la partie filetée de la vis 3.

Une rondelle 25 est prévue en entretoise entre les deux brides 5, 6 afin de laisser un jeu 26 suffisant entre ces deux brides 5, 6 pour permettre leur libre rotation. Ce jeu 26 sert également au bon fonctionnement de la bille 29 permettant de positionner les deux brides 5, 6 l'une par rapport à l'autre, comme on le verra ultérieurement. La rondelle 25 est engagée dans des méplats 27, 28 ménagés respectivement dans les brides 5 et 6.

Selon l'invention, le dispositif comporte un moyen 29 pour positionner et maintenir temporairement les brides 5, 6 en position alignées l'une par rapport à l'autre avant la mise en place ou après le retrait de l'organe amovible 7. Ce moyen 29 est représenté plus en détail à la figure 4, et est constitué d'une bille 29 montée sur une bride 5 en étant rappelée'en saillie par rapport au plan inférieur de cette bride 5 pour pouvoir s'engager dans un logement 30 complémentaire de l'autre bride 6 lorsque celle-ci est en position. Pour ce faire, la bride 5 est munie d'un alésage 31 dont le diamètre correspond à celui de la bille 29. Cet alésage 31 est taraudé à sa partie supérieure, et comporte un rétrécissement 32 à sa partie inférieure en regard de l'autre bride 6, de sorte que la bille 29 ne peut pas sortir de l'alésage 31. A la partie supérieure, la bille 29 est au contact d'un ressort de rappel 33 qui est comprimé par une vis sans tête 34 insérée dans le taraudage de l'alésage 31. Ainsi, le ressort 33 assujettit la bille 29 contre le rétrécissement 32, et en saillie vers l'extérieur. Lorsque la bille 29 pénètre dans le logement 30 de l'autre bride 6 un léger blocage entre les deux brides 5, 6 est réalisé. Ce blocage est obtenu en position alignée des brides 5, 6 telle que représentée aux figures 1 et 2. De la sorte, il est plus facile de mettre en place l'organe amovible 7. De plus, lorsque l'on retire cet organe amovible 7, le volant 1 reste en place correctement aligné par rapport à la colonne de direction 2 tant qu'aucune tentative n'est faite pour le faire tourner. Le jeu 26 entre les deux brides 5, 6 est dimensionné de façon à permettre un pivotement correct de ces deux brides autour du goujon 3 et un glissement adéquate de la bille 29, ainsi que son insertion dans le logement 30.

Bien évidemment, l'invention peut faire l'objet de nombreuses variantes par rapport aux modes de réalisation préférentiels décrits ci-dessus. Par exemple, les chevilles et les évidements peuvent être disposés radialement à l'axe 4, ou tangentiellement à l'axe 4, et l'organe amovible 7 peut être réalisé de différentes manières équivalentes.

Dans un mode d'exécution non représenté, l'organe amovible 7 comporte en outre un dispositif de sécurité constitué par un levier latéral agissant sur un téton assurant un verrouillage automatique. Ce téton pénètre latéralement dans l'organe amovible 7 et l'organe amovible 7 ne peut être retiré qu'après retrait du téton.

La tige latérale de verrouillage comporte un ressort de rappel qui coopère avec le téton et assure un mouvement latéral d'avancée ou de recul.

Le dispositif 7 peut comporter également plusieurs billes avec des ressorts tarés destinées à compenser l'effort porté sur l'axe de direction. Il n'est donc pas possible d'exercer un effort suffisant pour casser l'antivol de direction. Un effort important fait sauter la bille d'un cran au cran suivant.

## Revendications

1. Dispositif antivol pour véhicule automobile permettant normalement d'associer, d'une manière rigide, le volant (1) à la colonne de direction (2) ou, lorsque le véhicule doit être protégé, de désolidariser en rotation le volant (1) de la colonne de direction (2), comportant un goujon (3) parallèle à l'axe (4) de la colonne (2) mais excentré par rapport à cet axe (4) associant une bride (5) du volant à une bride (6) de la colonne de direction (2), les deux brides (5,6) pouvant pivoter l'une par rapport à l'autre autour de ce goujon (3) comportant au moins un organe amovible (7) destiné à coopérer avec ces deux brides (5,6) pour les associer normalement rigidement l'une à l'autre en interdisant leur pivotement autour du goujon (3), et dans lequel, une fois que l'organe amovible (7) a été ôté, le volant (1) n'est plus solidaire en rotation de la colonne de direction (2), caractérisé en ce que l'organe amovible reliant les deux brides (5,6) peut être ôté dans une direction orthogonale à l'axe (4) de la colonne de direction tout en laissant le volant et la colonne de direction (2) montés l'un sur l'autre par ce goujon (3).

2. Dispositif selon la revendication 1° caractérisé en ce qu'il comporte un moyen (29) pour positionner et maintenir temporairement les brides (5,6) en position l'une par rapport à l'autre, avant mise en place ou après retrait de l'organe amovible (7).

3. Dispositif selon la revendication 2° caractérisé en ce que le moyen de positionnement et de maintien (29) constitué d'une bille (29a) montée sur une bride (5) en étnt rappelée en saillie par rapport au plan de cette bride (5) pour pouvoir s'engager dans un logement (30) de l'autre bride (5), lorsqu'elle est en position et réaliser ainsi un léger blocage.

4. Dispositif selon l'une quelconque des revendications 1 à 3° caractérisé en ce que l'organe amovible (7) coopère avec la bride (5) du volant et/ou avec la bride (6) de la colonne de direction par l'intermédiaire d'au moins une cheville (9,14) solidaire de l'organe amovible (7) ou de cette bride (5,6), s'étendant orthogonalement à l'axe (4) de la colonne de direction, et engagée dans un évidement (10,13) complémentaire de cette bride (5,6) ou de l'organe amovible (7).

5. Dispositif selon l'une quelconque des revendications 1 à 4° caractérisé en ce que l'organe amovible (7) est constitué d'au moins une cheville (9) pouvant être engagée dans un évidement complémentaire (10) de la bride (6) de la colonne de direction, d'une plaque de support (11) commune aux chevilles, et d'un moyen de préhension (12).

6. Dispositif selon la revendication 5° caractérisé en ce que la plaque de support (11) est plane et en ce que les différentes chevilles (9,14) et/ou évidements (30,13) s'étendent parallèlement les uns aux autres.

7. Dispositif selon la revendication 6° caractérisé en ce que les brides (5,6) sont cylindriques de révolution autour de l'axe (4) de la colonne de direction, en ce qu'un méplat (15,16) tangentiel est ménagé à la périphérie de chacune d'elles pour réceptionner la plaque de support plane (11), et en ce que les chevilles (9,14) et/ou évidements (10,13) s'étendent perpendiculairement à la plaque de support (11) et au méplat (15,16).

8. Dispositif selon l'une quelconque des revendications 4 à 7° caractérisé en ce que l'organe amovible comporte une pluralité de chevilles (9) et/ou évidements (13) formant, avec une pluralité d'évidements (10) et/ou de chevilles (14) complémentaires des brides du volant et de la colonne de direction, un code spécifique à chaque dispositif.

9. Dispositif selon l'une quelconque des revendications 1 à 8° caractérisé en ce que l'une au moins des brides est constituée globalement d'un disque ou d'une collerette rapporté.

10. Dispositif selon l'une quelconque des revendications 1 à 9° caractérisé en ce que le goujon est constitué d'une vis (3) insérée dans un alésage (19) de l'une des brides (5) et dans un taraudage (20) de l'autre bride (6).

## Patentansprüche

1. Diebstahlsicherungs-Vorrichtung für Kraftfahrzeuge, die es - im Normalfall - erlaubt, das Lenkrad (1) fest mit der Steuersäule (2) zu verbinden, oder aber - sobald das Fahrzeug diebstahlgesichert werden soll - das Lenkrad (1) von der Lenksäule (2) zu lösen und leer laufen zu lassen und die mittels eines Zapfens (3), parallel zur Achse (4) der Lenksäule (2), aber exzentriert im Verhältnis zu dieser Achse (4) , wobei ein Flansch (5) des Lenkrads mit einem Flansch (6) der Lenksäule (2) verbunden wird und die beiden Flanschen (5,6) um den Zapfen (3) herum rotieren können, und ihrerseits ein abnehmbares Teil (7) aufnehmen, das dazu dient, um - im normalen Gebrauch - mit diesen beiden Flanschen (5,6) fest verbunden zu werden, was ihre Rotation um den Zapfen (3) herum verhindert und - sobald das abnehmbare Teil (7) weggenommen wurde - das Lenkrad (1) nicht mehr zusammen mit der Lenksäule (2) dreht und zwar dadurch gekennzeichnet, daß das abnehmbare Teil, das die beiden Flanschen (5,6) verbindet, in einer senkrecht zur Achse (4) der Lenksäule stehenden Richtung abgezogen werden kann, wobei das Lenkrad (1) auf der Lenksäule (2) - durch eben diesen Zapfen (3) miteinander verbunden - leerlaufend verbleibt.

2. Vorrichtung gemäß des Anspruchs 1, dadurch gekennzeichnet, daß es ein Mittel (29) besitzt, mit dem man zeitweilig die beiden Flanschen (5,6) - vor Einsetzen bzw. Abnahme des abnehmbaren Teils (7) - zueinander ausrichten und blockieren kann.

3. Vorrichtung gemäß des Patentanspruchs 2, dadurch gekennzeichnet, daß dieses Positionierungs- und Haltemittel (29) aus einer Kugel 29a) besteht, aufgebracht auf einem Flansch (5), wobei sie - zur Ebene dieses Flansches (5) gesehen - herausragt, um sich ihrerseits, sobald die richtige Position erreicht ist, in ein Lager (30) des anderes Flansches (5) einzufügen,, um damit eine leichte Verriegelung zu ermöglichen.

4. Vorrichtung gemäß irgendeiner der Patentansprüche 1 bis 3 , dadurch gekennzeichnet, daß das abnehmbare Teil (7) mit dem Flansch (5) des Lenkrads und oder dem Flansch (6) der Lenksäule - über mindestens einem Zapfen (9,14) - mit dem abnehmbaren Teil (7) fest verbunden zusammenwirkt, oder daß dieser Flansch (5,6), der sich rechtwinklig zur Achse (4) ausdehnt und sich in eine zusätzliche Öffnung (10,13) in eben diesem Flansch (5,6) oder dem abnehmbaren Teil (7) einfügt.

5. Vorrichtung gemäß welcher irgendeiner der Patentansprüche 1 bis 4, dadurch gekennzeichnet, daß das abnehmbare Teil (7) aus einem Zapfen (9) besteht, der sich in einer zusätzlichen Öffnung (10) des Flansches (6) der Lenksäule, in einer solchen der Halteplatte (11), die beiden Stiften gemeinsam ist und einer Greifvorrichtung (12) einsetzen kann.

6. Vorrichtung gemäß des Patentanspruchs 5, dadurch gekennzeichnet, daß die Tragplatte (11) eben ist und daß sich die einzelnen Zapfen (9,14) und/oder die Mulden (10/13) zueinander parallel ausdehnen.

7. Vorrichtung gemäß des Patentanspruchs 6, dadurch gekennzeichnet, daß die Flanschen (5,6) sich zylindrisch um die Achse (4) der Lenksäule drehen, wobei eine tangentielle Abflachung (15,16) an der Peripherie eines jeden Flansches ausgespart ist, um die flache Trägerplatte (11) aufnehmen zu können und daß die Zapfen (9,14) und/oder Mulden (10,13) sich rechtwinklig zur Trägerplatte (11) und der Abflachung (15,16) ausdehnen.

8. Vorrichtung gemäß irgendeiner der Patentansprüche 4 bis 7, dadurch gekennzeichnet, daß das abnehmbare Teil mehrere Zapfen (9) und/oder Mulden (13) besitzt, die - mit einer Mehrzahl von zusätzlichen Mulden (10) und/oder Zapfen (14) der Flanschen oder der Lenksäule - einen für jede Vorrichtung spezifischen Code ausbilden.

9. Vorrichtung gemäß welcher irgendeiner der Patentansprüche von 1 bis 8, dadurch gekennzeichnet, daß mindestens ein Flansch ganz aus einer Scheibe oder einem Bördelflansch besteht.

10. Vorrichtung gemäß welcher irgendeiner der Patentansprüche von 1 bis 9, dadurch gekennzeichnet, daß der Zapfen als eine Schraube (3) ausgeführt wird, die in eine Bohrung (19) eines Flansches (5) und in die Bohrung (29) des anderen Flansches eingeschraubt wird.

## Claims

1. An antitheft device for motor vehicles which usually allows the coupling, in a rigid manner, the steer (1) to the steering column (2) or when the car has to be protected, allows the uncoupling in rotation of the steer (1) from the steering column (2), which includes a pin (3) parallel to the axis (4) of the steering column (2) but excentric as regards to this axis (4) connecting a strap (5) of the steer to another strap (6) of the steering column (2), both straps (5) and (6) being able to slew one with regards to the other around this pin (3), including at least one removable element (7) intended to cooperate with these two straps (5) (6) in order to associate them normally in a rigid manner one to the other, thus hindering their slewing around the pin (3) and in which once the removable element (7) has been removed, the steer (1) is no longer rigidly locked in rotation with the steering column (2) wherein this removable element connecting both straps (5, 6) may be removed in a direction orthogonal to the axis (4) of the steering column (2), while maintaining the steer (1) and the steering column (2) mounted one on the other with the said pin (3).

2. A device according to claim 1 wherein it includes a mean (29) for positionning and temporarily maintaining the straps (5, 6) in position one with regard to the other, before setting in place or after removal of the removable element (7).

3. A device according to claim 2 wherein the mean for positionning and maintaining (29) is constituted of a ball (29a) mounted on a strap (5) while being drawn back projected with regards to the plane of this strap (5) in order to be able to fit into a lodgment (30) of the other strap (5) when it is in position and thus realize a slight blocking.

4. A device according to anyone of claims 1 to 3 wherein the removable element (7) cooperates with the strap (5) of the steer and/or with the strap (6) of the steering column through at least one plug (9,14) linked to the removable element (7) or to this strap (5,6) extending orthogonally to the axis (4) of the steering column and fitted into a cavity (10,13) complementary to this strap (5,6) or to the removable element (7).

5. A device according to anyone of the claims 1 to 4 wherein the removable element (7) is made of at least one plug (9) which may be fitted into a cavity (10) complementary to the strap (6) of the steering column, of a holding plate (11) which is common to both plugs and a mean for gripping (12).

6. A device according to claim 5 wherein the holding plate (11) is plane and wherein the various plugs (9,14) and/or cavities (10,13) extend in a parallel manner one to the others.

7. A device according to claim 6 wherein the straps (5,6) are of revolution cylindrical shape around the axis (4) of the steering column, wherein a tangential flat (15,16) is adjusted to receive the plane holding plate (11) and wherein the plugs (9,14) and/or cavities (10,13) extend orthogonally to the holding plate (11) and the flat (15,16).

8. A device according to anyone of the claims 4 to 7, wherein the removable element involves a plurality of plugs (9) and/or cavities (13) thus forming with a plurality of cavities (10) and/or plugs (14), complementary to the straps of the steer and the steering column, a code specific to each device.

9. A device according to anyone of the claims 1 to 8, wherein at least one strap is in the whole made of a detachable disk or flange.

10. A device according to anyone of the claims 1 to 9, wherein the pin is made of a thread (3) inserted in a boring (19) of one of the straps (5) and in a threading (20) of the other strap (6).
